# EUROPEAN PATENT SPECIFICATION

(11) **EP 0 576 825 B1**
(45) Date of publication and mention of the grant of the patent: **23.10.1996**
(21) Application number: 93108336.4
(22) Date of filing: 24.05.1993
(51) Int. Cl.: D06F 58/02, D06F 58/20

(54) **Improvement in clothes driers**
Verbesserung in Wäschetrocknern
Amélioration dans les sèche-linge

(30) Priority: 30.06.1992 IT PN920052
(43) Date of publication of application: 05.01.1994
(73) Proprietor: ELECTROLUX ZANUSSI ELETTRODOMESTICI S.p.A., I-33170 Pordenone (IT)
(72) Inventor: Mazzocco, Roberto, I-33080 Porcia, Pordenone (IT); Napolitano, Gennaro, I-33170 Pordenone (IT); Candotto Mis, Mario, I-33081 Aviano, Pordenone (IT)
(74) Representative: Giugni, Valter

(56) References cited:
- GB-A- 1 416 882
- GB-A- 2 063 441
- GB-A- 2 095 384
- GB-A- 2 118 699
- GB-A- 2 143 935

## Description

This invention relates to an improvement in a clothes drying machine, in particular of the domestic type, provided with a special heating element for the air used to dry the clothes.

The technique is known, for instance from the disclosure in the Italian patent application no. PN91A000016 filed by the same applicant, to make use of a more or less considerable part of the hot, damp air exhausted by a clothes drying machine, so as to mix it with the fresh, dry air taken in from the outside ambient. This measure, especially when the exhaust air is taken for reuse during the last phases of the drying process, ie. when the exhaust air does no longer contain much humidity, is actually instrumental in achieving considerable energy saving results.

The technique is also known from the above cited patent application to be used so as to take in fresh, dry air from the outside ambient and, instead of conveying it directly toward traditional heating element means where it is heated up before being sent into the drying drum, to convey it directly into the hollow space existing between the outer casing of the appliance and the drying drum inside the same appliance.

The dry, fresh air is in this way caused to flush the outer surface of the drum which, owing to the fact that it is usually made of some appropriate metal material, and therefore has a high heat conductivity, has a large outside surface area and is at a temperature that lies very close to the highest one prevailing inside the drum during drying, practically forms a heat source that, apart from being very easy and convenient to tap, is particularly inexpensive and reliable.

In practice, by causing the fresh intake air to first follow a flow path inside the appliance casing and then causing it to flush the outer surface of the drum, a heat exchanger is in such a way provided between the air inside the drum and the outside air before the latter is directly heated up by the regular heating element.

The two afore mentioned techniques have the common purpose of bringing about an energy saving effect using different construction methods. However, clothes drying machines made according to the above cited techniques, or even according to other techniques known from the prior art to implement a recirculation of the drying air, have following drawback: when the hot air is blown into the drum holding the clothes to be dried, it adds to the rotational motion of the same drum to bring about a vigorous agitation of the drying load so as to enable the entire mass of clothes to be adequately flushed by the drying air.

Said combined effect of the tumbling drum motion and the stirring action of the hot air blown thereinto is widely known to cause small fabric pieces or even thread fringes or hems to come off the edges of the clothes, all said fragments gathering into larger clots known in general as lint.

This lint are easily intercepted by said resistance heating elements and, consisting of wires or bars placed across the air-flow path. as described in GB 2095384, GB 2143935, GB 2063441. As the drying process goes on, it keeps growing thicker on the same electrical resistance heating elements, thereby giving rise to a couple of possible drawbacks: on the one hand they may accumulate to such an extent that the air conduit becomes practically clogged in correspondence of the site in which the heating elements are located, thereby impairing the regularity and effectiveness of the whole drying process, while on the other hand they, under extreme conditions, may catch fire due to the heat transferred by the same resistance-type heating elements, with easily imaginable consequences.

A further peculiarity of these types of clothes drying machines lies in the fact that their blower drive motor is usually a rather low-efficiency motor, which therefore wastes a good deal of its power input, thereby lowering the overall efficiency of the whole clothes drying appliance.

It therefore would be desirable, and it actually is an object of the present invention, to provide a clothes drying machine which is capable of assuring an improved energy efficiency and, at the same time, does away with the above cited drawbacks, while however keeping the basic ability of operating in a simple, reliable way, without increasing the complexity of its construction and implying higher manufacturing costs.

This aim is reached according to the present invention in a clothes drying machine provided with both a resistance-type air heating element made in a particular form of embodiment, and a particular arrangement of the blower drive motor, as basically described in the appended claim.

For a better understanding, the invention will be further described by way of non-limiting example with reference to the accompanying drawings, in which:

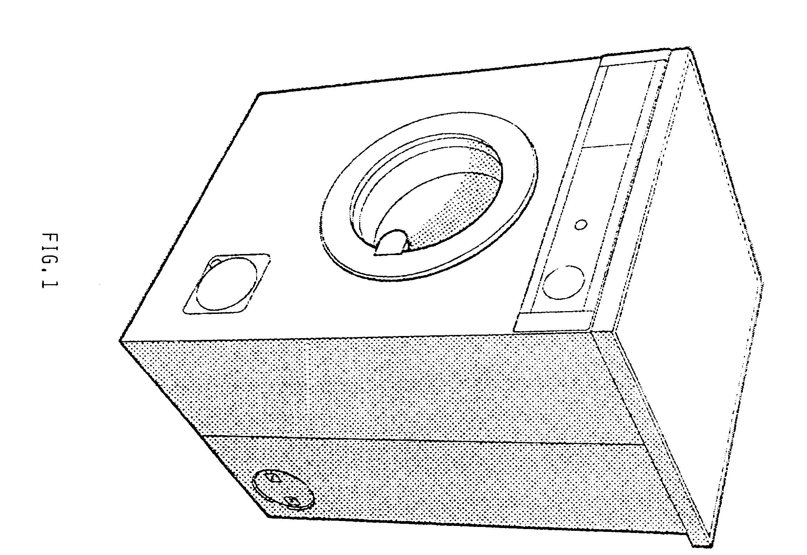

- Figure 1 is a perspective, schematical view of a clothes drying machine according to the present invention;

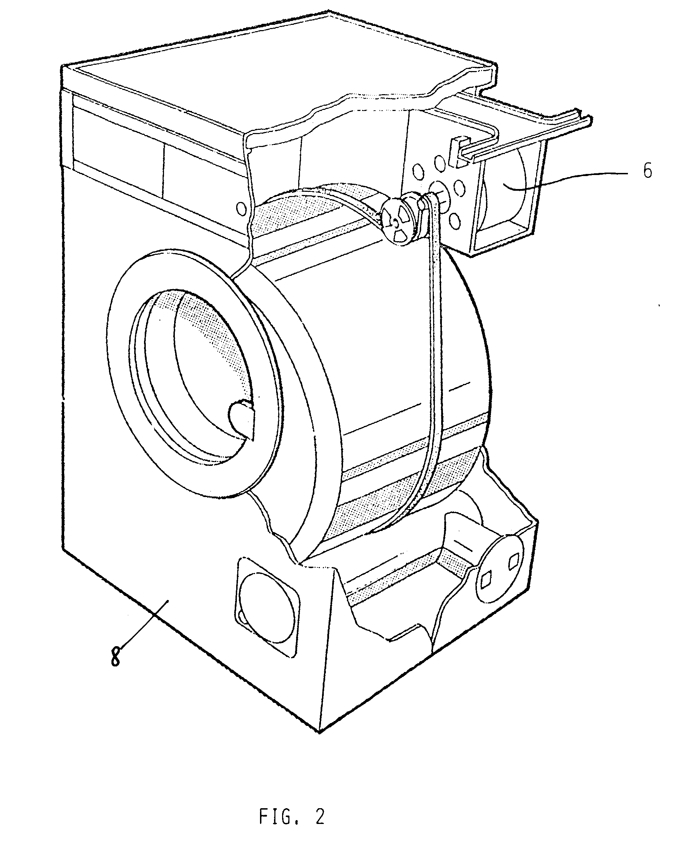

- Figure 2 is a see-through view of the inner side of the clothes drying machine shown in Figure 1, with the various functional component parts according to the present invention;

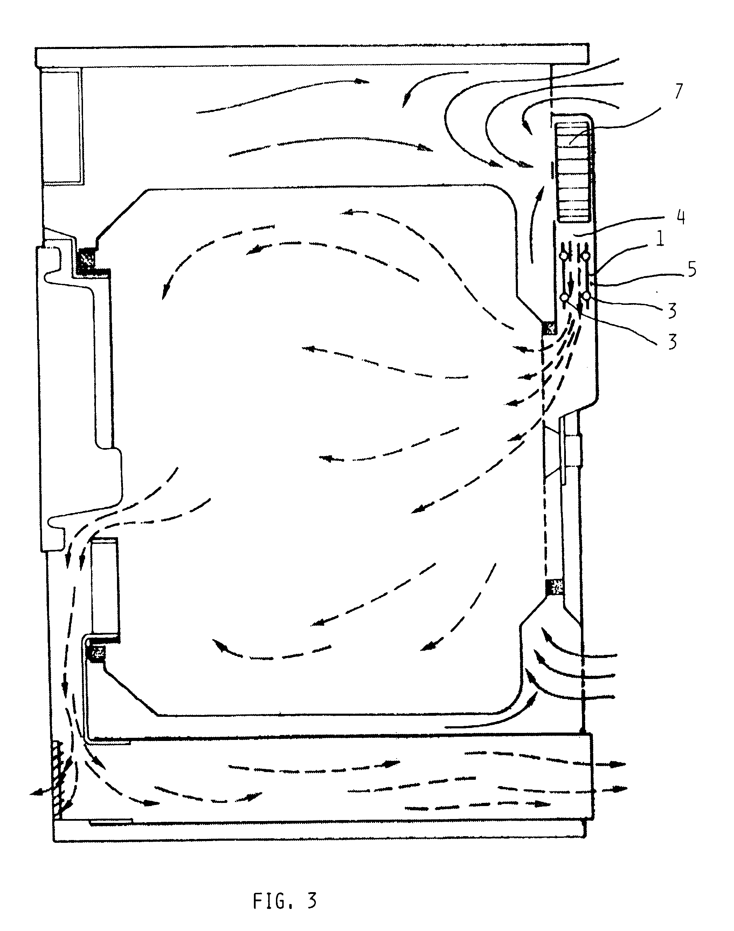

- Figure 3 is a vertical, cross-sectional view of the side portion of the clothes drying machine according to Figure 1;

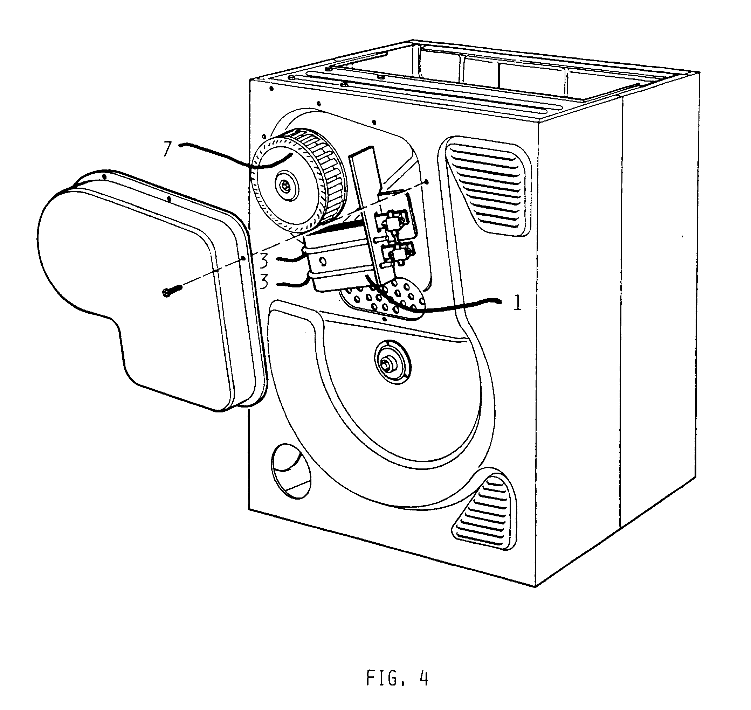

- Figure 4 is a rear view of the hot-air conveying conduit according to the present invention.

The devised solution essentially consists in the use of a heating element formed by a metal conduit 1 which is made relatively shorter and may be variously shaped.

In the walls of said conduit a plurality of resistance-type, preferably sheathed heating elements 3 are inserted and evenly distributed all over the surface of said metal conduit.

Traditional means, as known from the prior art, are used to ensure a proper contact between the outer surface of these resistance-type heating elements and the surface of the metal conduit, so that the heat generated by said heating elements will be transferred on to the surface of the conduit with as low a thermal resistivity, or heat insulation effect, as possible.

As shown in the Figures, said electrical resistance-type heating elements are almost fully embedded in the thickness of the walls of the conduit and, what is more important, do not have any portion projecting inwards or outwards with respect to the conduit, ie. protruding either inside or outside the conduit.

The conduit itself is installed inside a further enlarged conduit 4 through which the air to be heated up is caused to flow, while the position of said first inner conduit 1 with respect to said second outer conduit is tangential to the air stream flowing into it, so as to minimize any possible pressure drop due to aerodynamic resistance.

Furthermore, said air stream flushes said inner conduit by flowing not only inside it, but also over its outer surfaces 5, so that all the heat generated by said electrical resistance-type heating elements and transferred on to the surface of said inner conduit 1 will be actually taken up by the stream air flowing by.

It therefore ensues that the air stream flowing along said conduit is gradually heated up by the walls thereof, which are in turn heated up by the electrical resistance-type heating elements embedded in their thickness, while no clogging problem actually arises due to lint or other foreign matters being intercepted, since the flow path both inside and outside said conduit is perfectly smooth and free of any hindrance.

## Claims

1. Clothes drying machine, particularly of the domestic type, comprising a drum, an outer casing (8) housing said drum, heating means to heat up the drying air, a blower (7) to circulate said heated-up drying air through said drum, said blower being driven by an electric motor (6), and conduits (4) suitable to convey said heated-up air into and outside said drum , so that substantially all of the heat generated by said heating means (1,3,5) and the waste heat given off by said motor (6) is used to heat up the drying air, characterized in that said heating means (1,3,5) consists in a metal conduit comprising a plurality of sheathed heating elements (3) fully embedded in its walls, so that no protruding parts are present either inside or outside said metal conduit, and evenly distributed all over the surface of said metal conduit, said metal conduit being installed inside an enlarged conduit (4) so that the air stream flushes said metal conduit by flowing not only inside it but also on its outer surface (5).

## Patentansprüche

1. Wäschetrockenmaschine, insbesondere Haushaltstrockner, mit einer Trommel, einem äußeren, die Trommel beherbergenden Gehäuse (8), einer Heizeinrichtung zum Erwärmen der Trockenluft, einem Gebläse (7) zum Umwälzen der erwärmten Trockenluft durch die Trommel, wobei das Gebläse von einem Elektromotor (6) angetrieben wird, und mit Leitungen (4), die dazu vorgesehen sind, die erwärmte Luft innerhalb und ausserhalb der Trommel zu befördern, so daß im wesentlichen die gesamte durch die Heizeinrichtung (1, 3, 5) erzeugte Wärme und die von dem Motor (6) abgegebene Abwärme verwendet wird, um die Trockenluft zu erwärmen, **dadurch gekennzeichnet, daß** die Heizeinrichtung (1, 3, 5) aus einer metallischen Leitung besteht, die eine Vielzahl von ausgeprägten Heizelementen (3) aufweist, die in ihre Wände voll integriert sind, so daß nach innen oder nach außen in Bezug auf die metallische Leitung keine hervorstehenden Teile vorhanden sind, und die gleichmäßig über die gesamte Oberfläche der metallischen Leitung verteilt sind, wobei die metallische Leitung innerhalb einer vergrößerten Leitung (4) angeordnet ist, so daß der Luftstrom dadurch, daß er nicht nur innerhalb sondern auch an deren äußerer Oberfläche (5) fließt, die metallische Leitung umspült.

## Revendications

1. Sèche-linge, notamment du type à usage domestique, comprenant un tambour, une caisse extérieure (8) logeant ledit tambour, des moyens chauffants pour chauffer l'air de séchage, une soufflante (7) pour faire circuler ledit air de séchage chauffé à travers ledit tambour, ladite soufflante étant entraînée par un moteur électrique (6), et des conduits (4) appropriés pour transporter ledit air chauffé dans le tambour et à l'extérieur de celui-ci, de telle sorte que sensiblement toute la chaleur engendrée par lesdits moyens chauffants (1, 3, 5) et la chaleur perdue dégagée par ledit moteur (6) est utilisée pour chauffer l'air de séchage, caractérisé en ce que lesdits moyens chauffants (1, 3, 5) consistent en un conduit métallique comprenant une pluralité d'éléments chauffants sous gaine (3) parfaitement encastrés dans ses parois, de telle sorte qu'aucune partie saillante n'est présente ni à l'intérieur ni à l'extérieur dudit conduit métallique, et répartis uniformément sur toute la surface dudit conduit métallique, ledit conduit métallique étant installé à l'intérieur d'un conduit plus grand (4) si bien que le flux d'air parcourt ledit conduit métallique en s'écoulant non seulement à l'intérieur de celui-ci mais aussi sur sa surface extérieure (5).
